# EUROPEAN PATENT SPECIFICATION

(11) **EP 1 123 257 B1**
(45) Date of publication and mention of the grant of the patent: **18.09.2002**
(21) Application number: 98961691.7
(22) Date of filing: 23.10.1998
(51) Int. Cl.: C01C 1/18, C05C 1/02

(54) **METHOD OF PREPARATION OF AMMONIUM NITRATE PRODUCTS HAVING IMPROVED THERMAL STABILITY AND PRODUCTS THEREOF**
VERFAHREN ZUR HERSTELLUNG VON AMMONIUMNITRAT PRODUKTEN MIT VERBESSERTER THERMISCHER STABILITÄT UND PRODUKTE DIESE ENTHALTEND
PROCEDE DE PREPARATION DE PRODUITS A BASE DE NITRATE D'AMMONIUM A STABILITE THERMIQUE AMELIOREE ET PRODUITS CORRESPONDANTS

(30) Priority: 07.08.1998 FR 9810206
(43) Date of publication of application: 16.08.2001
(73) Proprietor: NORSK HYDRO a.s., 0240 Oslo (NO)
(72) Inventor: CASENOVE, Yves, F-64140 Billere (FR); SANS, Jean-Marc, F-64000 Pau (FR); ISAKSEN, Jan, Birger, N-3931 Porsgrunn (NO)
(74) Representative: Bleukx, Lucas Lodewijk M.
(86) International application number: NO9800318
(87) International publication number: WO00007938

(56) References cited:
- EP-A1- 0 692 468
- WO-A1-94/01366
- US-A- 4 408 998

## Description

The present invention relates to a method of preparation of ammonium nitrate (AN) particles with improved stability against thermal cycling comprising use of drying agent. The invention further comprises AN products containing said stabilised AN products, such as explosives and fertilizers.

A well known problem with (AN) is the phase changes occurring when the AN is exposed to temperature changes. These phase changes implies volume changes and thereby formation of dust and subsequent caking. Said problems would to a great extent be avoided if the AN-product did not contain any free water, but this is in practice impossible to obtain. Commercial porous ammonium nitrate particles (AN-PP) will generally contain 0.01-0.5 weight% free water. Further, during storage of AN when stored for a prolonged period of time it may absorb water from surrounding air and thereby be increasingly sensible to the above stated problem.

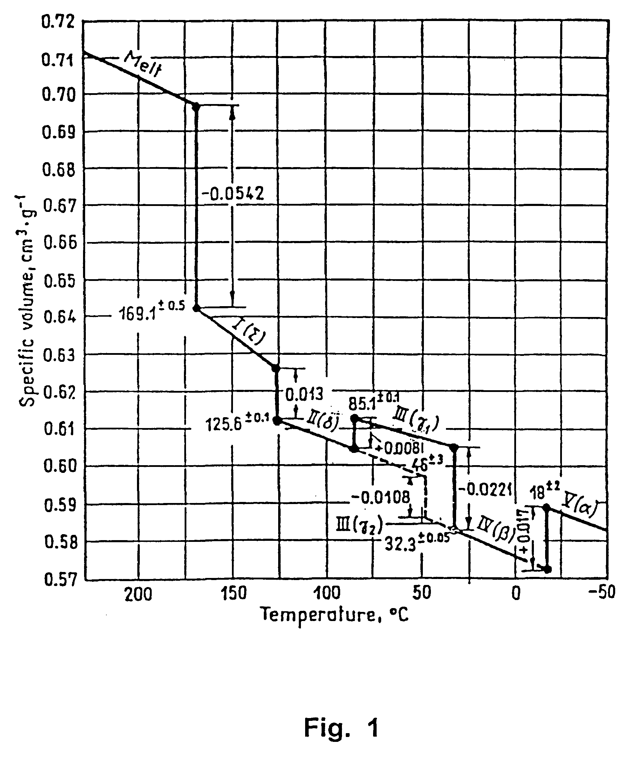

The crystals of AN are differently structured depending on temperature, as shown by table 1 below. The following data and figure 1 are given by Honti, G.D.: The Nitrogen Industry, Akademiai kiado, Budapest 1967.

**Table 1**

| Phase Transition | Transition temp. °C | Heat of transition kJ/mole | Volume change cm³/gram |
|---|---|---|---|
| V-IV | -16.9 | 0.47 | + 0.017 |
| IV-III | 32.3 | 1.70 | - 0.0221 |
| III-II | 84.1 | 1.35 | + 0.0081 |
| II-I | 125.9 | 4.44 | - 0.013 |
| I-liquid | 169.6 | 6.20 | - 0.0542 |
| IV-II * | 50.9 | 1.86 | |

| | | | |
|---|---|---|---|
| * These transitions refer to the metastable transitions. | | | |

Figure 1 shows specific volume in cm³/gram of ammonium nitrate as function of temperature and volume changes at the respective phase transitions.

As specific volumes are different for each type of crystal, changes of temperature involving phase transitions greatly affect the hardness of the particles or prills that are progressively transformed into powder. The transition between phases III and IV, that occurs at 32.3°C, is crucial for the conservation. For anhydrous crystals phase III will not be present and the transition will be the following:

| | | |
|---|---|---|
| Cubic(I) | in the temperature range | 169°C-125°C |
| Quadratic(II) | " | 125°C- 51°C |
| Orthorombic(IV) | " | 51°C--18°C |
| Quadratic (V) | " | <-18°C |

Thus totally dehydrated ammonium nitrate prills don't suffer from the 32.3°C transition point and will remain stable for a long period. However, it is quite impossible to produce industrially anhydrous AN-PP, only low water products can be achieved.

Various methods are known for binding water and thereby reducing the problems related to the phase transitions. Magnesium nitrate is the best known additive. It will be added to the melt prior to prilling, typical amount of additive will be 1-2%. Addition of agents which will shift the transition points such that the stable range is extended are also known. Examples of such additives are ammonium sulphate and potassium nitrate and typical amounts are at least 2%. Addition of such agents will take place during the production of the ammonium nitrate.

From Romanian Patent No. 110810-B1 there is known a method for manufacture of porous ammonium nitrate by adding a mixture of ammonium sulphate and aluminium sulphate. These agents will decompose giving off gases that generates pores and solid residues impart mechanical stability of granule. The porosity agents also increase drying capacity of granules. The final product has 11-15% porosity and 12-17% oil absorption capacity. From US-Patent No. 4.408.998 there is known a process for preparing thermally stable ammonium nitrate granules by spraying a composition containing at most 5% by weight water, about 0,5% to 5% by weight of an insoluble and chemically inert silica containing material, ammonium nitrate and other components into a fluidized bed of ammonium nitrate seed particles. Further, it is known from EP 0648.190 B1 a method for manufacturing free-flowing ammonium nitrate particles by coating prior to final drying and storage. The AN particles are sprayed with an aqueous solution of at least one inorganic salt, forming hydrates with at least one molecule crystal water. Preferred salts are magnesium- and/or calcium nitrate in amounts corresponding to 0.1-3 weight% of the coated particles.

The main objective of the invention was to arrive at a simple method for preparation of thermally stable AN particles, especially porous AN particles.

Another objective was to arrive at a method, comprising addition of drying agent, and AN products compatible with the requirements for use of the AN product in explosives or fertilizers.

A further objective was to arrive at a process comprising minimum alteration of the basic ammonium nitrate production process.

Though some of the known methods reduced the problems related to the phase transition, they still comprised some disadvantages, especially in connection with use of the AN product in explosives. Thus the coating method according to the above EP-patent would induce alteration of the porosity of the particles as the pores will be partly blocked by the coating and thereby reduce the oil absorption capacity of the AN-PP, which then would be unsuitable for use in explosives. Some of the known drying agents would also be incompatible with use of the AN particles in explosives. The inventors therefore started their further investigation by trying to define requirements for the drying agent, and when these were fulfilled the manufacturing process and addition of drying agent could be decided on. In view of the knowledge of the phase transition problems and the advantages and disadvantages of known methods, the inventors found that the following criteria should be met:

The drying agent should have a large capacity for absorption of water such that only minor amounts will be necessary. It should be easy to obtain even distribution of the drying agent in the AN product. The agent should be compatible with use of the AN particles in explosives. Said agent should also be compatible with use of the AN product in fertilizers as the phase problem of AN also constitutes a problem in fertilzers containing AN. It was further found that the critical water vapour pressure above the drying agent should be less than said pressure over AN or AN containing products in question. Addition of a drying agent should not induce any reduction in the flowability of the AN particles.

The inventors then looked into how different types of drying agents could be applied. Aside from selection of proper agents, it was also a question where in the process the agent best could be introduced. In order to avoid substantial alteration of the basic manufacturing process, it was decided to add the drying agent subsequent to the production of the AN particles and cooling to ambient temperature. The question was then how the drying agent should be added to the AN particles. Addition by coating the AN particles with a solution or slurry of the drying agent was first tested. However, due to the problem of blocking the pores in porous AN this method was excluded. It was then surprisingly found that excellent drying effect could be obtained just by mechanically mixing the drying agent with the AN particles. Even distribution of the agent and in necessary amounts calculated on total amount of free water in the AN particles, had to be secured. By free water it is in this application meant water which can be absorbed by the drying agent. Said free water is loosely or weakly bound crystal water and water present in the pores of the AN particles. It was also found that the selection of drying agent should be made in view of possible dust formation related to the drying agent. Another problem, though not a very critical one, was the risk of segregation due to difference in particle size of the AN particles and the drying agent. In these initial tests fine SiO₂ particles having large surface area and silicagel were tested. The silicagel was found to give good effect and no dusting problems. Dust formation was more prominent with the SiO₂ particles which also had lower water absorption capacity/gram.

Addition of Calcium- and Magnesium Nitrate salts was also tested. It was then surprisingly found that only the Magnesium salts were applicable. The reason that the Calcium Nitrate (CN) salts could not be used seemed to be formation of a liquid phase of AN-water-CN.

In connection with explosives, the addition of magnesium nitrate (MgN) will not constitute a dilution problem of the oxygen source for the explosive. In that respect MgN will be preferred over silicagel. Further experiments showed that AN particles coated with MgN according to the above EP-Patent could be used as drying agent. Even when only a minor fraction of the total AN comprised this MgN coated AN a thermally stable AN product could be attained. Such a mixed AN product would have only slightly lower oil absorption capacity than the porous AN. Another advantage with this procedure was that the particle size of the two AN products will be about the same and no segregation problem occurred. A series of experiments, based on the experiences from the initial tests, were then performed in order to establish the effects on thermal stability, mechanical strength, dust formation etc. of the final product. Different qualities of porous AN were used during these experiments. The main quality difference of these AN products was their respective water content.

The invention comprises a method for preparation of ammonium nitrate (AN) products having improved stability, comprising addition to AN-particles a solid drying agent having water binding capacity and where said agent is compatible with the end use of the AN products thus formed and having a critical relative water vapour pressure above the agent being less than said pressure above the AN product.

The drying agent should preferably have a water binding capacity being substantially equal to or larger than the content of free water in the AN-particles. Porous ammonium nitrate would be useful as AN-particles for the method.

Preferred drying agent will be AN particles containing magnesium nitrate or being coated with magnesium nitrate. The drying agent may also be an inert water absorbing inorganic compound such as silicagel.

The product according to the invention is an AN product comprising a solid drying agent mechanically mixed with AN particles and where the drying agent has water binding capacity and being compatible with the end use of the AN products and having a critical relative vapour pressure above the agent being less than said pressure above the AN product. The invention also comprises ammonium nitrate containing explosives or fertilizers comprising AN particles mechanically mixed with a drying agent according to the above definition.

The invention will be further explained and elucidated in connection with the description of the figures and the examples.
- Figure 1: shows the specific volume of AN as function of temperature.
- Figure 2: shows 1st. thermal cycling of AN-PP product I.
- Figure 3: shows 2nd. thermal cycling of AN-PP product I.
- Figure 4: shows 1st. thermal cycling of AN-PP product II.
- Figure 5: shows 2nd. thermal cycling of AN-PP product II.
- Figure 6: shows 1st. thermal cycling of AN-PP product III.
- Figure 7: shows 2nd. thermal cycling of AN-PP product III.

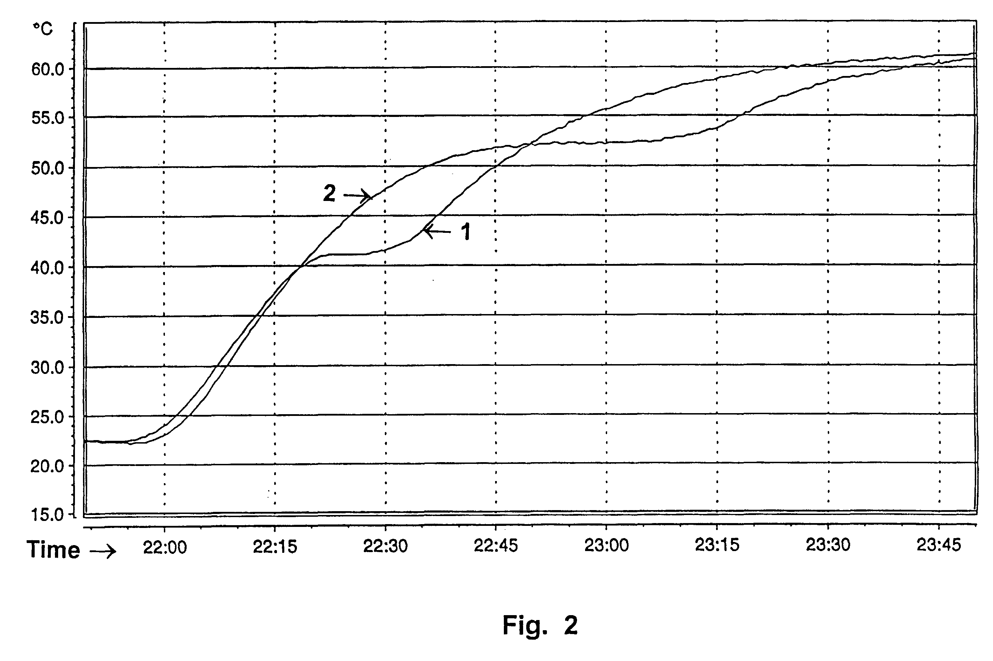

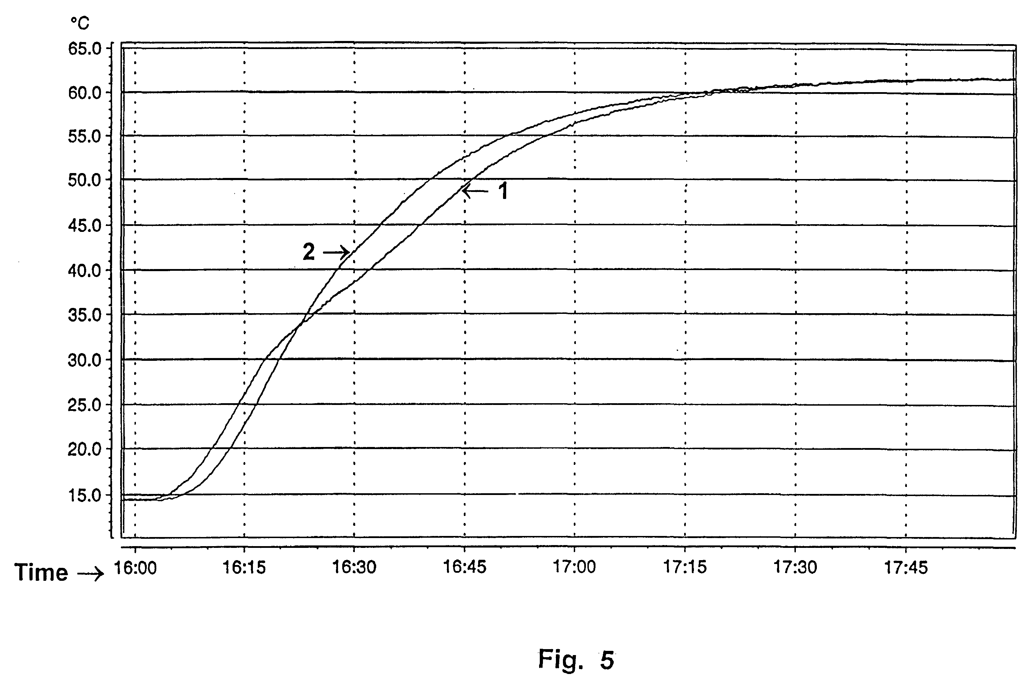

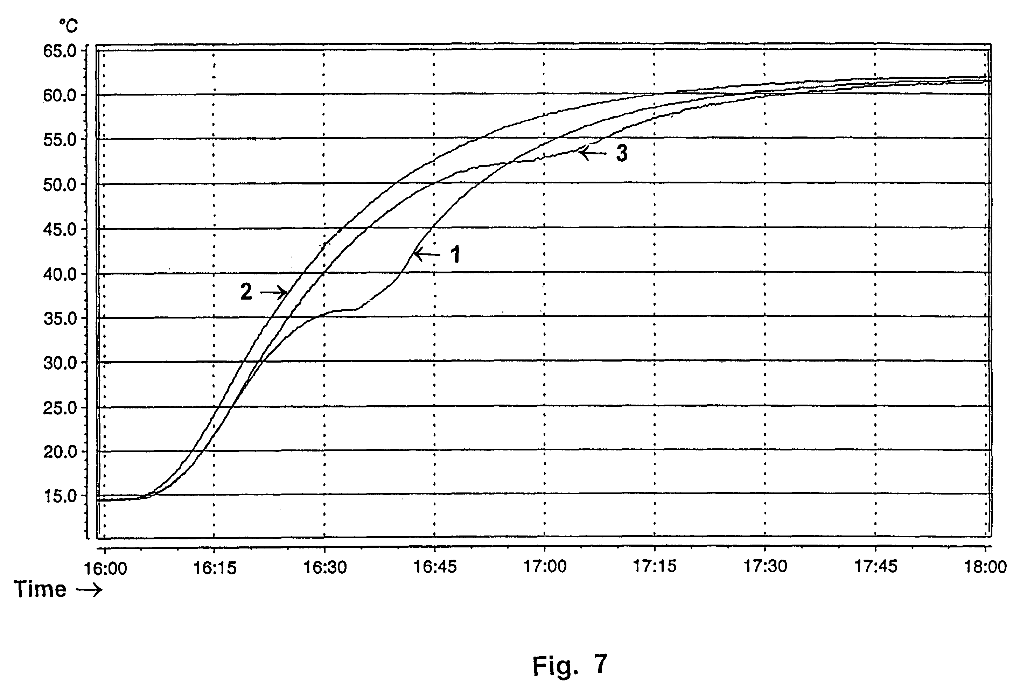

In figures 2-7 the thermal cycling of the AN-PP products I-III are compared with the cycling performance for the same products mechanically mixed with a drying agent. The AN-products are exposed to storage temperatures of 15-65°C for several hours. The phase changes during heating are endothermal and accordingly the temperature of the sample will fall in connection with the phase changes.

For figures 2-7 curves 1 refer to the pure AN-PP products. For the tests shown in curves 2 is the blend of pure AN-PP and AN containing MgN.

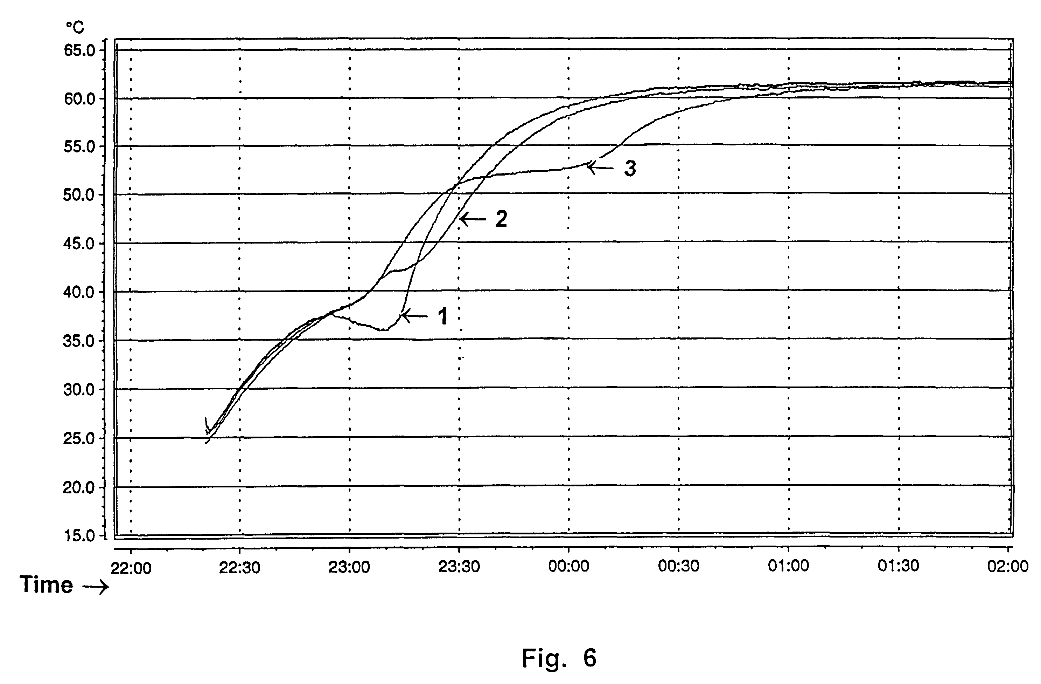

Figures 6-7 show the cycling performance for AN-PP product III (curve 1) compared to products comprising said product III mechanically mixed with AN containing MgN (curve 2), and product III mixed with silicagel (curve 3).

AN-PP product I has a water content of 0.01 weight%, product II has a water content of 0.20 weight% and product III has a water content of 0.08 weight%.

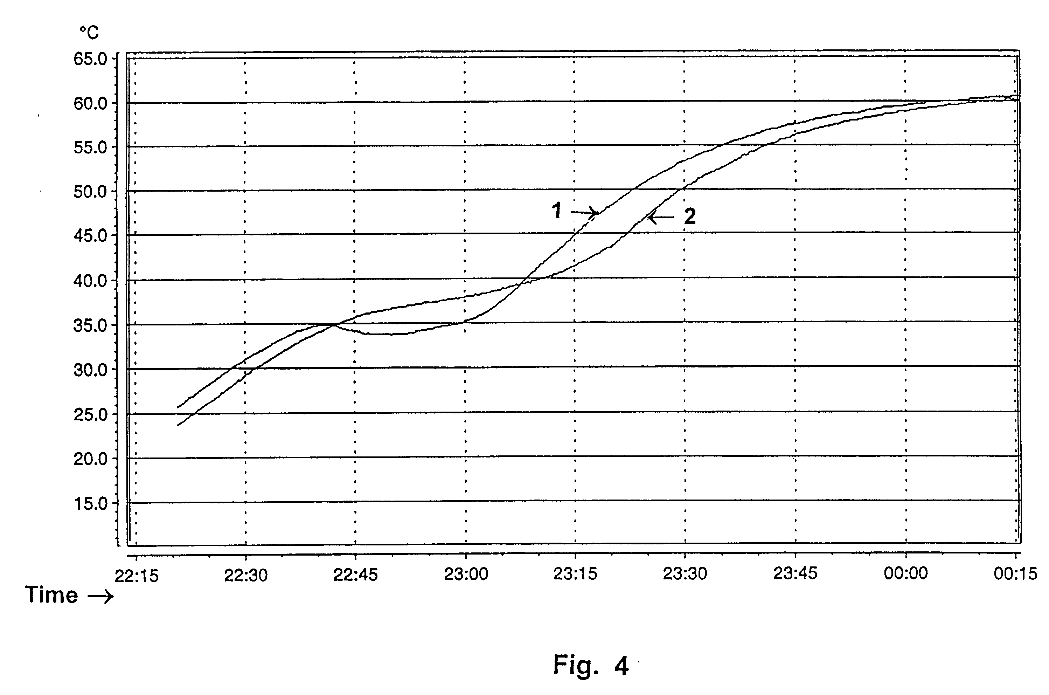

From figure 2 it can be seen that even with a very low water content in AN-PP I there is a marked phase change during the first cycling at about 41°C. Because of the low water content (and rapid heating) this change appears at a higher temperature than for products II and III (Figures 4 and 6).

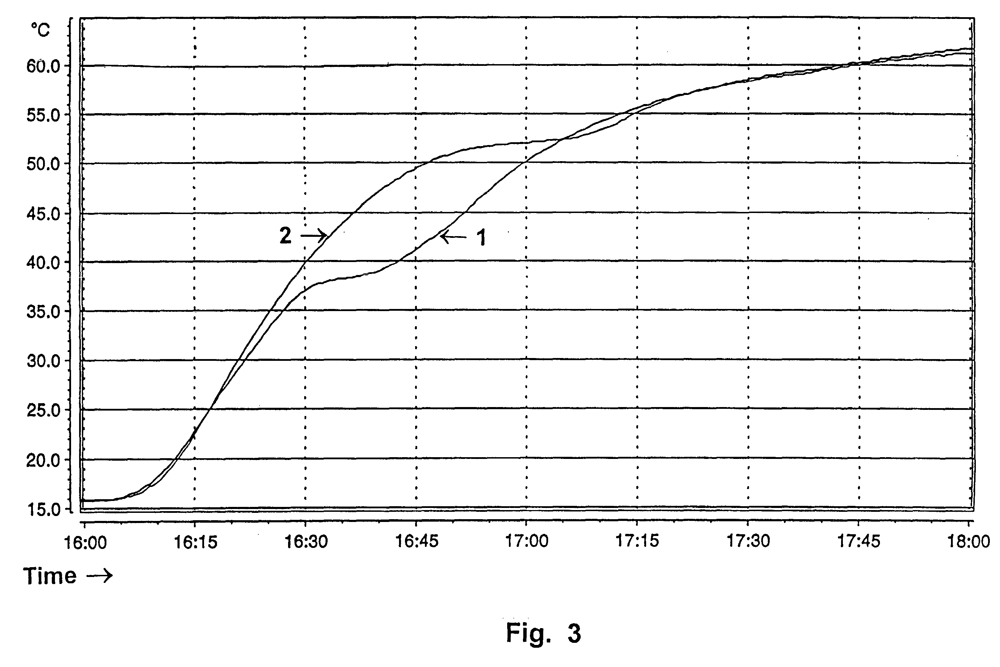

The phase change at about 52°C for curve 2 (figures 3 and 4) relates to the metastable phase change IV-II. This phase change is of minor importance as storage temperatures above 50°C are rather rare.

As can be seen from the curves, the addition of drying agent according to the invention efficiently reduces the phase transformation caused by thermal cycling in Ammonium Nitrate. The phase transformation takes place as in the original sample during the first thermal cycle, but the phase transformation at the 32°C is prevented during subsequent cycles.

The explanation is most likely that the transformation liberates free water and loosely bound crystal water in the AN-PP and the AN containing MgN during the first cycle absorbs all this water. On further cycling there is no water left in the AN-PP to enable the phase transition IV--->III, but instead forces the phase transition IV--->II that takes place at about 50°C. This phase transition is less detrimental than the transition IV--->II as the product only rarely is exposed to such temperatures during storage.

### Example 1

This example shows the effects of mixing various drying agents to the AN-PP products I-III. The properties of the AN-products and the effects of thermal cycling, with and without addition of drying agents are shown in table 2.

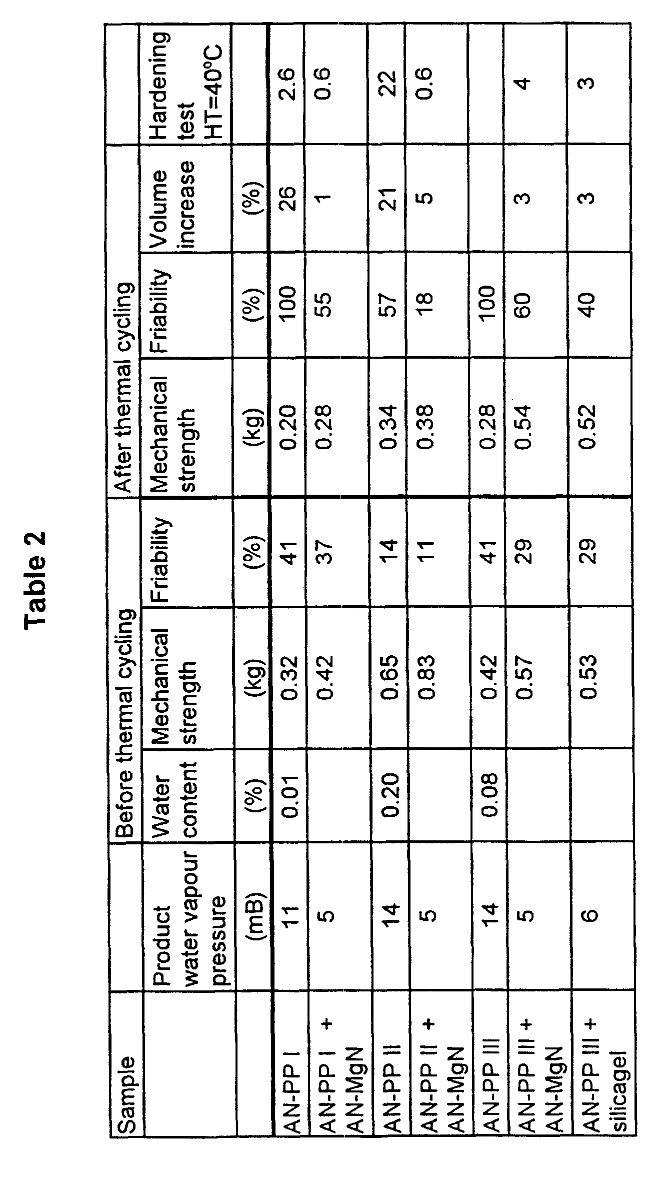

As can be seen from table 2, the results confirm our conclusions from the measurements shown in figures 2 to 7, By using additives according to the invention, the mechanical strength, friability and volume increase after the thermal cycling are significantly improved when compared to the original samples (AN-PP I, II and II). Further, the improvement in storage properties (hardening test) is also significant.

### Example 2

To determine the importance of the amount of drying agent required to achieve the desired effect, a new test was carried out. AN-PP II was used as this had the highest water content. The amount of drying additive was varied from 0 and up to what is required to absorb the amount of water present in the AN-PP II (expressed as "X", = stoichiometric amount). The samples were subjected to the same tests as used in example 1. The results are presented in table 3.

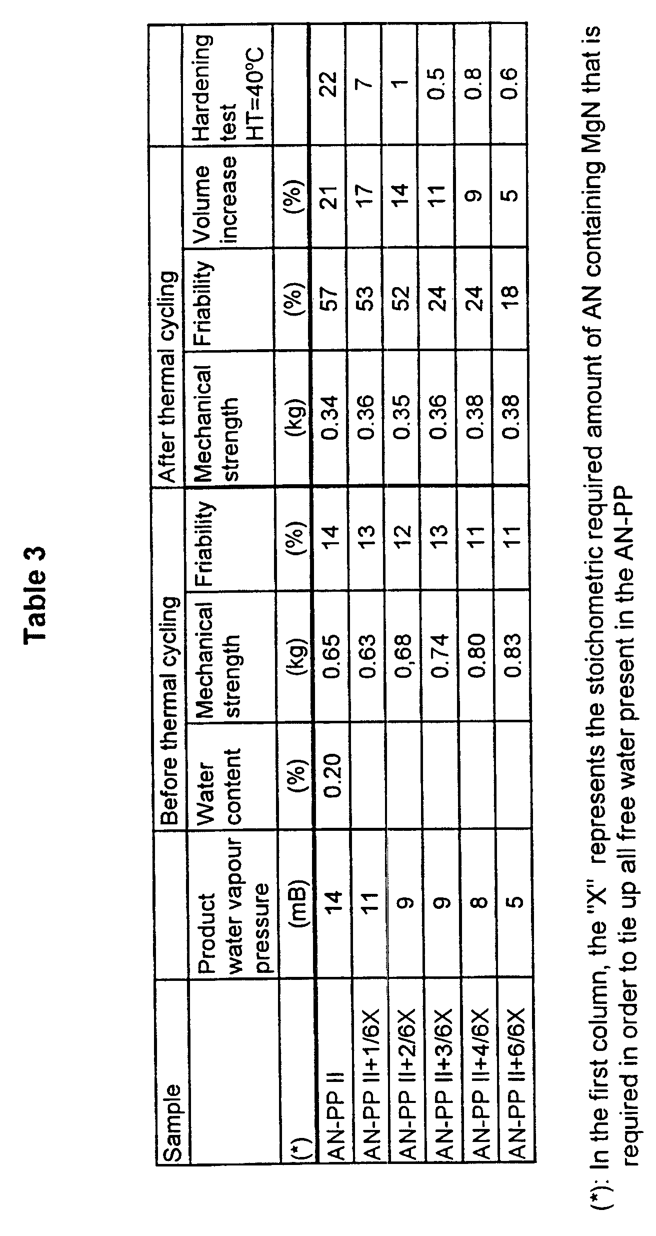

As can be seen from table 3, even the addition of less than stoichiometric required amounts of AN containing MgN improves slightly the cycling stability (mechanical strength, friability, and volume increase) of the product. However, the storage properties represented by the Hardening test shows a dramatic improvement even after addition of as little as 1/6 of the stoichometric required amount of AN containing MgN. The explanation is most likely that the reduced water vapour pressure prevents the formation of crystal bridges between the particles.

### The definitions related to the tests are as follows:

### Thermal cycling:

Fines are removed from sample and 150 ml is filled into a graduated cylinder. The cylinder is then sealed with rubber stopper. The cylinder is then subjected to 5 thermal cycles (each cycle: 12H @15°C and 12 @45°C). On the completion, the increase in volume, the amount of fines formed, the mechanical strength of individual prills and the friability are determined.

### Friability (Cyclone method):

The sample is screened (1.0 mm) and 100 g is filled into the inlet funnel to the cyclone. Air with a pressure of 0.17 MPa is applied and the sample is sucked through the ejector and into the cyclone and particles are collected from the bottom outlet of he cyclone. This sample is screened (1.0 mm) again, and the total amount of the fines formed is calculated.

### Mechanical (crushing) strength:

A sample of product to be tested is screened (1.4 and 1.6 mm) and product retained on the 1.4 mm screen is retained. About 50 prills are transferred to the weighing pan of a mechanical balance. A hand held steel rod is placed on top of a prill and slight pressure is applied whilst watching the scale. The reading at the point where the prill crushes is recorded (in kg). The procedure is repeated with a total of 34 prills. The two highest and the two lowest numbers are discarded and the average value of the 30 remaining readings is calculated.

### Water content:

The water content of the sample is determined by standard Karl Fischer method.

### Hardening test:

About 80 ml of sample material is placed in small bags of PE foil and heat sealed. Several of these bags are stacked on top of each other in a test rig and a constant pressure of 16.7MPa/m² is applied. The test is carried out at ambient temperature or at 40°C. After the desired storage period (normally 3 days) the bag is carefully split and removed before the sample is placed on a 4.5 mm screen. This screen is plased in a shaking apparatus which gives the sample a knock by letting the screen fall down 30 mm. A total of 20 knocks is applied to the sample. The "Hardening Number" is calculated based on the amount of sample passing through the screen (which is measured at 5 knocks intervals). The "Hardening Number" is in the range from 0 to 100. Values below 5 are very good for AN-PP, below 10 is acceptable, while values above 20 are dubious for AN-PP in tropical climate.

From the above results it can be seen that by adding a drying agent to porous AN and mechanically mixing the AN particles and the drying agent there is obtained a product that is well within the requirements for AN-PP to be used in tropical climate, even for AN-PP that contains 0.20 weight% water. The necessary amount of drying agent will depend on the water content of the AN-PP and the place of use of the product, i.e. the storage conditions the product will be exposed to, such as tropical climate etc., the main requirement being that the absorption capacity of the drying agent corresponds to about the amount of free water in the AN product to be stabilized. If AN-MgN is used as drying agent, typical amounts will be 1-5 weight% of the AN-PP amount.

Further it was found that addition of smaller amounts of drying agent compared to what is required to absorb the amount of free water present in the product also has a beneficial effect. This effect is mainly a dramatic improvement in storage properties, but also a slight improvement in thermal cycling stability.

The invention thus gives a simple solution to the thermal cycling stabilisation and also to improving the overall storage properties of AN products. One significant advantage will be that the capacity of the production plant for AN-PP can be substantially increased as the need for extremely low water content in the AN-PP can be reduced. Relatively high water content can be compensated by addition of slightly larger amounts of the drying agent

## Claims

1. A method for preparation of ammonium nitrate (AN) products having improved thermal stability, and where a drying agent is applied, comprising mechanically mixing AN particles with a solid drying agent having water binding capacity being substantially equal to or larger than the content of free water in the AN particles, and that said agent is compatible with the end use of the AN products thus formed and having a critical relative water vapour pressure above the agent being less than said pressure above the AN product.

2. A method according to claim 1,
**characterized in that**
AN particles applied are porous ammonium nitrate.

3. A method according to claim 1,
**characterized in that**
there is applied a drying agent being AN particles containing magnesium nitrate.

4. A method according to claim 1,
**characterized in that**
ammonium nitrate coated with magnesium nitrate is applied as drying agent.

5. A method according to claim 1,
**characterized in that**
an inert water absorbing inorganic compound is applied as drying agent.

6. A method according to claim 1,
**characterized in that**
silicagel is applied as drying agent.

7. AN product containing a drying agent comprising a mechanical mixture of AN particles and a solid drying agent, having water binding capacity being substantially equal to or larger than the content of free water in the AN particles, and being compatible with the end use of the AN products thus formed and having a critical relative vapour pressure above the agent being less than said pressure above the AN product.

8. AN product according to claim 7,
**characterized in that**
the AN product is an explosive comprising AN particles mechanically mixed with a drying agent.

9. AN product according to claim 7,
**characterized in that**
the AN product is an ammonium nitrate containing fertilizer containing AN particles mechanically mixed with a drying agent.

## Patentansprüche

1. Verfahren zur Herstellung von Ammoniumnitratprodukten (AN-Produkten), die verbesserte thermische Stabilität aufweisen, und wobei ein Trocknungsmittel angewandt wird, umfassend das mechanische Vermischen von AN-Teilchen mit einem festen Trocknungsmittel, das Wasserbindevermögen aufweist, das im wesentlichen gleich oder größer ist als der Gehalt an freiem Wasser in den AN-Teilchen, und daß das Mittel vereinbar ist mit der Endverwendung der so gebildeten AN-Produkte und einen kritischen relativen Wasserdampfdruck über dem Mittel aufweist, der geringer ist als der Druck über dem AN-Produkt.

2. Verfahren nach Anspruch 1,
**dadurch gekennzeichnet, daß**
angewandte AN-Teilchen poröses Ammoniumnitrat sind.

3. Verfahren nach Anspruch 1,
**dadurch gekennzeichnet, daß**
ein Trocknungsmittel angewandt wird, das AN-Teilchen sind, die Magnesiumnitrat enthalten.

4. Verfahren nach Anspruch 1,
**dadurch gekennzeichnet, daß**
mit Magnesiumnitrat beschichtetes Ammoniumnitrat als Trocknungsmittel angewandt wird.

5. Verfahren nach Anspruch 1,
**dadurch gekennzeichnet, daß**
eine inerte, wasserabsorbierende anorganische Verbindung als Trocknungsmittel angewandt wird.

6. Verfahren nach Anspruch 1,
**dadurch gekennzeichnet, daß**
Silicagel als Trocknungsmittel angewandt wird.

7. AN-Produkt, das ein Trocknungsmittel enthält, umfassend eine mechanische Mischung von AN-Teilchen und einem festen Trocknungsmittel, das Wasserbindevermögen aufweist, das im wesentlichen gleich oder größer ist als der Gehalt an freiem Wasser in den AN-Teilchen, und vereinbar ist mit der Endverwendung der so gebildeten AN-Produkte und einen kritischen relativen Wasserdampfdruck über dem Mittel aufweist, der geringer ist als der Druck über dem AN-Produkt.

8. AN-Produkt nach Anspruch 7,
**dadurch gekennzeichnet, daß**
das AN-Produkt ein Explosivstoff ist, umfassend AN-Teilchen mechanisch vermischt mit einem Trocknungsmittel.

9. Produkt nach Anspruch 7,
**dadurch gekennzeichnet, daß**
das AN-Produkt ein ammoniumnitrathaltiges Düngemittel ist, das AN-Teilchen mechanisch vermischt mit einem Trocknungsmittel enthält.

## Revendications

1. Procédé de préparation de produits à base de nitrate d'ammonium (AN) ayant une stabilité thermique améliorée, et où un agent siccatif est appliqué, comprenant le mélange mécanique de particules AN avec un agent siccatif solide ayant une capacité de fixation de l'eau supérieure ou égale à la teneur en eau libre dans les particules AN, et ledit agent est compatible avec l'utilisation finale des produits AN ainsi formés et ayant une pression de vapeur d'eau relative critique au-dessus de l'agent, inférieure à ladite pression au-dessus du produit AN.

2. Procédé selon la revendication 1,
**caractérisé en ce que**
les particules AN appliquées sont du nitrate d'ammonium poreux

3. Procédé selon la revendication 1,
**caractérisé en ce que**,
on y applique un agent siccatif constitué par des particules AN contenant du nitrate de magnésium.

4. Procédé selon la revendication 1,
**caractérisé en ce que**
le nitrate d'ammonium revêtu de nitrate de magnésium est appliqué en tant qu'agent siccatif.

5. Procédé selon la revendication 1,
**caractérisé en ce que**,
un composé inorganique inerte absorbant l'eau est appliqué en tant qu'agent siccatif.

6. Procédé selon la revendication 1,
**caractérisé en ce que**,
un gel de silice est appliqué en tant qu'agent siccatif.

7. Produit AN contenant un agent siccatif comprenant un mélange mécanique de particules AN et un agent siccatif solide, ayant une capacité de fixation d'eau sensiblement égale ou supérieure à la teneur en eau libre dans les particules AN, et étant compatible avec l'utilisation finale des produits AN ainsi formés et ayant une pression de vapeur relative critique au-dessus de l'agent, inférieure à ladite pression au-dessus du produit AN.

8. Produit AN selon la revendication 7
**caractérisé en ce que**
le produit AN est un explosif comprenant des particules AN mélangées mécaniquement à un agent siccatif.

9. Produit AN selon la revendication 7
**caractérisé en ce que**
le produit AN est un engrais contenant du nitrate d'ammonium, contenant des particules AN mélangées mécaniquement à un agent siccatif.
